# EUROPÄISCHE PATENTSCHRIFT

(11) **EP 4 004 658 B1**
(45) Veröffentlichungstag und Bekanntmachung des Hinweises auf die Patenterteilung: **23.11.2022**
(21) Anmeldenummer: 20764076.4
(22) Anmeldetag: 27.08.2020
(51) Int. Cl.: G05B 19/042, H04B 1/713, H04L 5/00

(54) **AUTOMATISIERUNGSSYSTEM UND VERFAHREN ZUM DRAHTLOSEN EINBINDEN EINES FUNKTEILNEHMERS AN EIN AUTOMATISIERUNGSSYSTEM**
AUTOMATION SYSTEM AND METHOD FOR WIRELESSLY INTEGRATING A RADIO CLIENT IN AN AUTOMATION SYSTEM
SYSTÈME D'AUTOMATISATION ET PROCÉDÉ D'INTÉGRATION SANS FIL D'UN CLIENT RADIO DANS UN SYSTÈME D'AUTOMATISATION

(30) Priorität: 30.08.2019 DE 102019123348
(43) Veröffentlichungstag der Anmeldung: 01.06.2022
(73) Patentinhaber: Beckhoff Automation GmbH, 33415 Verl (DE)
(72) Erfinder: SCHLOTTHAUER, Daniel, 13127 Berlin (DE); BUDDE, Torsten, 33335 Gütersloh (DE)
(74) Vertreter: Patentanwaltskanzlei WILHELM & BECK
(86) Internationale Anmeldenummer: PCT/EP2020/073920
(87) Internationale Veröffentlichungsnummer: WO 2021/037952

(56) Entgegenhaltungen:
- AU-A1- 2017 202 093
- US-A- 6 014 406
- US-A1- 2006 077 917

## Beschreibung

Die Erfindung betrifft ein Automatisierungssystem, und ein Verfahren zum Einbinden eines Funkteilnehmers an ein Automatisierungssystem.

Diese Patentanmeldung beansprucht die Priorität der deutschen Patentanmeldung DE 10 2019 123 348.8, deren Offenbarungsgehalt hiermit durch Rückbezug aufgenommen wird.

Es sind Automatisierungssysteme bekannt, bei denen eine Master-Steuereinheit einen Kommunikationsbus bereitstellt, mit dem Busteilnehmer angesteuert und/oder Daten eines Busteilnehmers empfangen werden können. Die Kommunikation kann dabei mittels Datentelegrammen erfolgen, die von den Busteilnehmern empfangen und versendet werden, beispielsweise über das in der internationalen Norm IEC 61131-9 normierte IO-Link-Kommunikationssystem. Ferner sind Systeme bekannt, bei denen ein Busteilnehmer einen drahtlosen Kommunikationsweg zu Funkteilnehmern bereitstellt. Mittels eines drahtlosen Kommunikationswegs zu Funkteilnehmern bereitgestellte Kommunikationsmöglichkeiten werden beispielsweise als IO-Link-Wireless bezeichnet.

Dabei können Funkvorrichtungen zum Einsatz kommen, die beispielsweise als IO-Link-Wireless-Master bezeichnet werden. Ein solcher IO-Link-Wireless-Master kann bis zu fünf Funkmodule aufweisen, wobei jedes der Funkmodule auf einem eigenen Funkkanal Daten senden und empfangen kann, wobei die Funkkanäle auch als Tracks bezeichnet werden können. Über jeden Funkkanal können bis zu acht Funkteilnehmer eingebunden werden. Es kann vorgesehen sein, mittels Frequenzspreizung eine Kanaländerung der Funkkanäle vorzunehmen, um etwaige Kollisionen zu vermeiden und/oder die Auswirkungen solcher Kollisionen zu verringern. Damit dies erfolgen kann, muss die Kanaländerung für alle Funkkanäle synchronisiert erfolgen. Dies kann über eine festverdrahtete Synchronisierungsleitung innerhalb des IO-Link-Wireless-Masters erfolgen. Ein Beispiel für eine solche Frequenzspreizung ist das unter der Bezeichnung "Frequency Hopping Spread Spectrum" bekannte Verfahren, welches auch abgekürzt als "Frequency Hopping" bezeichnet werden kann.

Die Druckschrift AU 2017 202 093 A1 offenbart ein drahtloses Kommunikationssystem für Industrieanwendungen, bei dem Funkteilnehmer drahtlos in ein Automatisierungssystem eingebunden werden.

Die Druckschrift US 6 014 406 A1 offenbart ein Kommunikationssystem mit Frequenzwechseln.

Eine Aufgabe der vorliegenden Erfindung ist es, ein flexibleres Automatisierungssystem bereitzustellen.

Diese Aufgaben werden mit dem Automatisierungssystem gemäß Anspruch 1, und dem Verfahren zum Einbinden eines Funkteilnehmers an ein Automatisierungssystem gemäß Anspruch 7 gelöst. Vorteilhafte Weiterbildungen sind in den abhängigen Patentansprüchen angegeben.

Die Erfindung umfasst ein Automatisierungssystem, das mindestens eine Master-Steuereinheit, mindestens einen ersten Funkteilnehmer, eine erste Funkvorrichtung und einen Uhrenmaster umfasst. Der Uhrenmaster kann Signale ausgeben. Mittels der Master-Steuereinheit wird ein Bussystem bereitgestellt, wobei eine Kommunikation innerhalb des Automatisierungssystems mittels des Bussystems erfolgt. Die erste Funkvorrichtung weist ein erstes Synchronisationselement, ein erstes Funkmodul und einen ersten Anschluss für das Bussystem auf. Das erste Funkmodul kann eine erste Funkverbindung zum ersten Funkteilnehmer aufbauen und dadurch Daten zwischen dem ersten Funkteilnehmer und dem Bussystem austauschen. Die erste Funkverbindung weist einen ersten Funkkanal auf, wobei der erste Funkkanal einen ersten Frequenzbereich umfasst. Das erste Funkmodul weist einen ersten Synchronisationseingang auf. Das erste Synchronisationselement ist eingerichtet, anhand eines über den ersten Anschluss für das Bussystem vom Uhrenmaster empfangenen Signals ein erstes Synchronisationssignal an den ersten Synchronisationseingang des ersten Funkmoduls auszugeben. Das erste Funkmodul ist eingerichtet, anhand des ersten Synchronisationssignals eine Frequenz innerhalb des ersten Frequenzbereichs des ersten Funkkanals wechseln zu können, wobei das Wechseln der Frequenz anhand einer ersten Hopping-Tabelle erfolgt.

Das Automatisierungssystem weist ferner eine zweite Funkvorrichtung und einen zweiten Funkteilnehmer auf. Die zweite Funkvorrichtung weist ein zweites Synchronisationselement, ein zweites Funkmodul und einen zweiten Anschluss für das Bussystem auf. Das zweite Funkmodul kann eine zweite Funkverbindung zum zweiten Funkteilnehmer aufbauen und dadurch Daten zwischen dem zweiten Funkteilnehmer und dem Bussystem austauschen.

Die zweite Funkverbindung weist einen zweiten Funkkanal auf, wobei der zweite Funkkanal einen zweiten Frequenzbereich umfasst. Das zweite Funkmodul weist einen zweiten Synchronisationseingang auf. Das zweite Synchronisationselement ist eingerichtet, anhand eines über den zweiten Anschluss für das Bussystem vom Uhrenmaster empfangenen Signals ein zweites Synchronisationssignal an den zweiten Synchronisationseingang des zweiten Funkmoduls auszugeben. Das zweite Funkmodul ist eingerichtet, anhand des zweiten Synchronisationssignals eine Frequenz innerhalb des zweiten Frequenzbereichs des zweiten Funkkanals zu wechseln, wobei das Wechseln der Frequenz anhand einer zweiten Hopping-Tabelle erfolgt. Dabei kann es vorgesehen sein, dass der erste Frequenzbereich und der zweite Frequenzbereich überlappen oder übereinstimmen. Die erste Hopping-Tabelle und die zweite Hopping-Tabelle können dann derart ausgestaltet sein, dass innerhalb des ersten Funkkanals jeweils eine andere Frequenz verwendet wird als im zweiten Funkkanal.

Das Automatisierungssystem weist ferner eine dritte Funkvorrichtung und einen dritten Funkteilnehmer auf. Die dritte Funkvorrichtung weist ein drittes Synchronisationselement, ein drittes Funkmodul und einen dritten Anschluss für das Bussystem auf. Das dritte Funkmodul kann eine dritte Funkverbindung zum dritten Funkteilnehmer aufbauen und dadurch Daten zwischen dem dritten Funkteilnehmer und dem Bussystem austauschen.

Die dritte Funkverbindung weist dabei einen dritten Funkkanal auf, wobei der dritte Funkkanal einen dritten Frequenzbereich umfasst. Das dritte Funkmodul weist einen dritten Synchronisationseingang auf. Das dritte Synchronisationselement ist eingerichtet, anhand eines über den dritten Anschluss für das Bussystem vom Uhrenmaster empfangenen Signals ein drittes Synchronisationssignal an den dritten Synchronisationseingang des dritten Funkmoduls auszugeben. Das dritte Funkmodul ist eingerichtet, anhand des dritten Synchronisationssignals eine Frequenz des dritten Frequenzbereichs des dritten Funkkanal zu wechseln, wobei das Wechseln der Frequenz anhand einer dritten Hopping-Tabelle erfolgt.

Die zweite Funkvorrichtung ist innerhalb einer ersten Funkreichweite der ersten Funkvorrichtung und einer dritten Funkreichweite der dritten Funkvorrichtung angeordnet und die erste Funkvorrichtung außerhalb der dritten Funkreichweite der dritten Funkvorrichtung angeordnet. Dadurch wird eine flexible Anordnung der Komponenten des Automatisierungssystems ermöglicht.

Der dritte Funkkanal mit der dritten Hopping-Tabelle ist identisch zum ersten Funkkanal mit der ersten Hopping-Tabelle. Dadurch kann der erste Funkkanal vorteilhafterweise jeweils für die erste Funkverbindung und die dritte Funkverbindung genutzt werden, da sich die erste Funkverbindung und die dritte Funkverbindung aufgrund der Funkreichweite nicht gegenseitig stören. Das Wechseln der Frequenz der ersten Funkverbindung, zweiten Funkverbindung und dritten Funkverbindung kann wiederum gleichzeitig erfolgen. Die erste Funkverbindung und die dritte Funkverbindung finden also innerhalb des ersten Funkkanals statt.

Die erste Funkvorrichtung wird dabei so betrieben, dass ein Wechseln der Frequenz durch das erste Synchronisationssignal getriggert wird, wobei der Uhrenmaster ein Signal ausgibt, welches vom Synchronisationselement empfangen wird und daraus das erste Synchronisationssignal generiert wird. Dadurch wird ein flexibleres Automatisierungssystem ermöglicht, bei dem weitere Funkvorrichtungen an anderer Stelle eingesetzt werden können, die ebenfalls synchronisiert sind. Falls beispielsweise acht oder weniger Funkteilnehmer eingesetzt werden sollen, kann die Funkvorrichtung weniger aufwändig konstruiert sein als die bekannten IO-Link-Wireless-Master mit festverdrahteter Synchronisierungsleitung.

Die erste Funkvorrichtung kann derart eingerichtet sein, dass die erste Funkverbindung zum ersten Funkteilnehmer dem IO-Link-Wireless-Standard entspricht.

In einer Ausführungsform ist das erste Funkmodul eingerichtet, bis zu acht erste Funkteilnehmer einzubinden.

In einer Ausführungsform erfolgt das Wechseln der Frequenz des ersten Funkkanals und der Frequenz des zweiten Funkkanals gleichzeitig. Dadurch können Kollisionen bei der Datenübertragung im ersten Funkkanal und im zweiten Funkkanal minimiert werden. Es kann dabei vorgesehen sein, dass die erste Funkvorrichtung und die zweite Funkvorrichtung derart angeordnet sind, dass sich Funkreichweiten der ersten Funkvorrichtung beziehungsweise zweiten Funkvorrichtung überschneiden.

Es kann vorgesehen sein, weitere Funkvorrichtungen und Funkteilnehmer in das Automatisierungssystem aufzunehmen. Insbesondere können dabei bis zu fünf verschiedene Funkkanäle vorgesehen sein, die mittels räumlich verteilten Funkvorrichtungen bereitgestellt werden. Jeder der fünf Funkkanäle weist eine ihm zugeordnete Hopping-Tabelle auf.

In einer Ausführungsform erfolgt ein Wechsel einer Frequenz der Funkkanäle nach einem vorgegebenen Zeitintervall, insbesondere in einem Zeitintervall zwischen einhundert Mikrosekunden und zehn Millisekunden. Beispielsweise kann ein Wechsel der Frequenz der Funkkanäle alle 1,664 Millisekunden erfolgen.

In einer Ausführungsform beinhaltet mindestens eines der Synchronisationselemente eine synchronisierte Uhr. Das zugehörige Synchronisationssignal wird anhand einer

Uhrzeit der synchronisierten Uhr ausgegeben, wobei eine Uhrzeit der synchronisierten Uhr anhand des vom Uhrenmaster ausgegebenen Signals eingestellt werden kann. Die synchronisierte Uhr oder die synchronisierten Uhren können dabei als sogenannte verteilte Uhren ausgestaltet sein, wie in der deutschen Patentanmeldung 10 2018 129 189.2 vom 20. November 2018 beschrieben. Der Inhalt der deutschen Patentanmeldung 10 2018 129 189.2 wird bezüglich dieses Aspekts ausdrücklich in die vorliegende Patentanmeldung aufgenommen. Sie Synchronisationselemente können dabei die in der deutschen Patentanmeldung 10 2018 129 189.2 als interne Uhren bezeichneten Bauelemente aufweisen, der Uhrenmaster kann die in der deutschen Patentanmeldung 10 2018 129 189.2 als Referenzuhr bezeichneten Elemente aufweisen.

In einer Ausführungsform umfasst das durch den Uhrenmaster ausgegebene Signal eine Uhrzeit.

Der erste Frequenzbereich und/oder der zweite Frequenzbereich und/oder der dritte Frequenzbereich der beschriebenen Ausführungsformen können sich überlappen. Das bedeutet, dass innerhalb der Funkkanäle in identischen Frequenzbereichen gesendet und empfangen werden kann. Die Hopping-Tabellen der Funkkanäle können dann so ausgestaltet sein, dass in jedem Funkkanal eine Frequenz verwendet wird, die gleichzeitig nicht innerhalb der anderen Funkkanäle verwendet wird. Insbesondere kann eine Auswahl der zu verwendenden Funkfrequenz danach erfolgen, dass sich die Funkverbindungen der Funkkanäle nicht gegenseitig stören.

Zusätzlich umfasst die Erfindung ein Verfahren zum drahtlosen Einbinden mindestens eines Funkteilnehmers in ein Automatisierungssystem gemäß Anspruch 7.

Die Erfindung wird nachfolgend anhand von Ausführungsbeispielen und unter Bezugnahme auf Figuren näher erläutert. Dabei zeigen jeweils in schematischer Darstellung
- Fig. 1: ein Automatisierungssystem;
- Fig. 2: einen Verfahrensablauf eines Verfahrens zum drahtlosen Einbinden eines Funkteilnehmers in ein Automatisierungssystem;
- Fig. 3: ein weiteres Automatisierungssystem;
- Fig. 4: eine Funkvorrichtung;
- Fig. 5: Hopping-Tabellen; und
- Fig. 6: ein weiteres Automatisierungssystem.

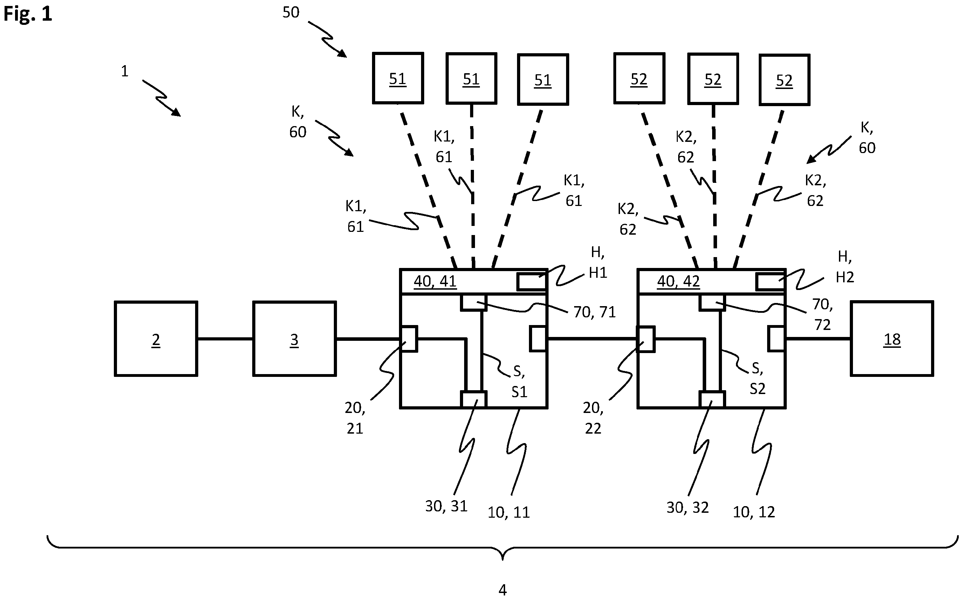

**Fig. 1** zeigt in einer möglichen erfindungsgemäßen Ausführungsform ein Automatisierungssystem 1 mit einer Master-Steuereinheit 2, einem Uhrenmaster 3, zwei Funkvorrichtungen 10 mit einer ersten Funkvorrichtung 11 und einer zweiten Funkvorrichtung 12, sechs Funkteilnehmer 50 mit je drei ersten Funkteilnehmern 51 und drei zweiten Funkteilnehmern 52. Mittels der Master-Steuereinheit 2 wird ein Bussystem 4 bereitgestellt, wobei der Uhrenmaster 3, die erste Funkvorrichtung 11 und die zweite Funkvorrichtung 12 Teilnehmer des Bussystems 4 sind. Eine Kommunikation innerhalb des Automatisierungssystems 1 erfolgt mittels des Bussystems 4. Die erste Funkvorrichtung 11 dient zum Einbinden der drei ersten Funkteilnehmer 51 in das Automatisierungssystem 1. Es kann beispielsweise vorgesehen sein, dass die ersten Funkteilnehmer 51 Sensoren und/oder Aktoren umfassen, wobei Sensordaten der Sensoren in das Bussystem 4 eingelesen oder Befehle vom Bussystem 4 an die Aktoren übertragen werden sollen und dies mittels der ersten Funkvorrichtung 11 erfolgen kann. Die erste Funkvorrichtung 11 weist ein Synchronisationselement 30, welches aufgrund seiner Anordnung in der ersten Funkvorrichtung 11 als erstes Synchronisationselement 31 bezeichnet wird, ein Funkmodul 40, welches aufgrund seiner Anordnung in der ersten Funkvorrichtung 11 als erstes Funkmodul 41 bezeichnet wird und einen Anschluss 20 auf, welcher aufgrund seiner Anordnung in der ersten Funkvorrichtung 11 als erster Anschluss 21 für das Bussystem 4 bezeichnet wird. Das erste Funkmodul 41 kann Funkverbindungen 60, in dem gezeigten Fall erste Funkverbindungen 61 zu den ersten Funkteilnehmern 51 aufbauen, wobei die ersten Funkverbindungen 61 in der Darstellung der Fig. 1 als gestrichelte Linien angedeutet sind. Über die ersten Funkverbindungen 61 können Daten zwischen den ersten Funkteilnehmern 51 und dem Bussystem 4 ausgetauscht werden, wobei dieser Datenaustausch mittels der ersten Funkvorrichtung 11 ermöglicht wird. Die erste Funkverbindung 61 weist einen als ersten Funkkanal K1 ausgebildeten Funkkanal K auf. Der erste Funkkanal K1 umfasst dabei einen Frequenzbereich, in dem eine Frequenz ausgewählt werden kann. Das erste Funkmodul 41 weist als Synchronisationseingang 70 einen ersten Synchronisationseingang 71 auf. Das erste Synchronisationselement 31 ist eingerichtet, anhand eines über den ersten Anschluss 21 für das Bussystem 4 vom Uhrenmaster 3 empfangenen Signals ein Synchronisationssignal S, insbesondere ein erstes Synchronisationssignal S1 an den ersten Synchronisationseingang 71 des ersten Funkmoduls 41 auszugeben. Das erste Funkmodul 41 ist eingerichtet, anhand des ersten Synchronisationssignals S1 eine Frequenz innerhalb des Frequenzbereichs des ersten Funkkanals K1 zu wechseln, wobei das Wechseln der Frequenz anhand einer Hopping-Tabelle H, insbesondere einer ersten Hopping-Tabelle H1 erfolgt. In der ersten Hopping-Tabelle H1 kann angegeben sein, aufweiche Frequenz als nächstes gewechselt werden soll.

Die Anzahl der ersten Funkteilnehmer 51 ist nicht auf drei beschränkt, es können auch mehr oder weniger erste Funkteilnehmer 51 vorgesehen sein, beispielsweise bis zu acht erste Funkteilnehmer 51. Entsprechen die ersten Funkverbindungen 61 dem IO-Link-Wireless-Standard, sind bis zu acht parallele erste Funkverbindungen 61 möglich.

Ebenfalls in Fig. 1 dargestellt ist eine optionale zweite Funkvorrichtung 12 und drei optionale zweite Funkteilnehmer 52. Die zweite Funkvorrichtung 12 dient zum Einbinden der drei zweiten Funkteilnehmer 52 in das Automatisierungssystem 1. Es kann beispielsweise vorgesehen sein, dass die zweiten Funkteilnehmer 52 Sensoren und/oder Aktoren umfassen, wobei Sensordaten der Sensoren in das Bussystem 4 eingelesen oder Befehle vom Bussystem 4 an die Aktoren übertragen werden sollen und dies mittels der zweiten Funkvorrichtung 12 erfolgen kann. Die zweite Funkvorrichtung 12 weist ein Synchronisationselement 30, welches aufgrund seiner Anordnung in der zweiten Funkvorrichtung 12 als zweites Synchronisationselement 32 bezeichnet wird, ein Funkmodul 40, welches aufgrund seiner Anordnung in der zweiten Funkvorrichtung 12 als zweites Funkmodul 42 bezeichnet wird und einen Anschluss 20 auf, welcher aufgrund seiner Anordnung in der zweiten Funkvorrichtung 12 als zweiter Anschluss 22 für das Bussystem 4 bezeichnet wird. Das zweite Funkmodul 42 kann ebenfalls Funkverbindungen 60, in dem gezeigten Fall dann zweite Funkverbindungen 62 zu den zweiten Funkteilnehmern 52 aufbauen, wobei die zweiten Funkverbindungen 62 in der Darstellung der Fig. 1 ebenfalls als gestrichelte Linien angedeutet sind. Über die zweiten Funkverbindungen 62 können Daten zwischen den zweiten Funkteilnehmern 52 und dem Bussystem 4 ausgetauscht werden, wobei dieser Datenaustausch mittels der zweiten Funkvorrichtung 12 ermöglicht wird. Die zweite Funkverbindung 62 weist einen als zweiten Funkkanal K2 ausgebildeten Funkkanal K auf. Der zweite Funkkanal K2 umfasst dabei einen Frequenzbereich, in dem eine Frequenz ausgewählt werden kann. Das zweite Funkmodul 42 weist als Synchronisationseingang 70 einen zweiten Synchronisationseingang 72 auf. Das zweite Synchronisationselement 32 ist eingerichtet, anhand eines über den zweiten Anschluss 22 für das Bussystem 4 vom Uhrenmaster 3 empfangenen Signals ein Synchronisationssignal S, insbesondere ein zweites Synchronisationssignal S2 an den zweiten Synchronisationseingang 72 des zweiten Funkmoduls 42 auszugeben. Das zweite Funkmodul 42 ist eingerichtet, anhand des zweiten Synchronisationssignals S2 eine Frequenz innerhalb des Frequenzbereichs des zweiten Funkkanals K2 zu wechseln, wobei das Wechseln der Frequenz anhand einer Hopping-Tabelle H, insbesondere einer zweiten Hopping-Tabelle H2 erfolgt. In der zweiten Hopping-Tabelle H2 kann angegeben sein, auf welche Frequenz als nächstes gewechselt werden soll.

Die Anzahl der zweiten Funkteilnehmer 52 ist nicht auf drei beschränkt, es können auch mehr oder weniger zweite Funkteilnehmer vorgesehen sein, beispielsweise bis zu acht zweite Funkteilnehmer 52. Entsprechen die zweiten Funkverbindungen 62 dem IO-Link-Wireless-Standard, sind bis zu acht parallele zweite Funkverbindungen 62 möglich.

Ebenfalls in Fig. 1 dargestellt ist ein optionaler weiterer Busteilnehmer 18, der ebenfalls ein Sensor und/oder Aktor sein kann und direkt, also ohne Funkverbindung 60 in das Bussystem 4 eingebunden ist.

In einem Ausführungsbeispiel findet das Wechseln der Frequenz des ersten Funkkanals K1 beziehungsweise des zweiten Funkkanals K2 gleichzeitig statt. Dadurch kann ermöglicht werden, dass sich der erste Funkkanal K1 und der zweite Funkkanal K2 nicht gegenseitig stören. Hierzu kann es vorgesehen sein, die erste Hopping-Tabelle H1 und die zweite Hopping-Tabelle H2 entsprechend zu wählen.

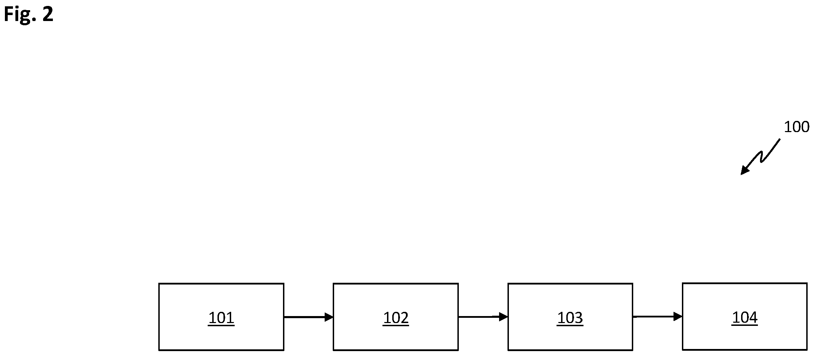

**Fig. 2** zeigt einen Verfahrensablauf 100 eines Verfahrens zum drahtlosen Einbinden eines Funkteilnehmers 50 in ein Automatisierungssystem 1. Dabei wird zunächst in einem Aufbauschritt 101 eine Funkverbindung 60 zum Funkteilnehmer 50 mittels eines Funkmoduls 40 aufgebaut. Daran anschließend wird in einem Empfangsschritt 102 ein Signal von einem Uhrenmaster 3 eines Bussystems 4 empfangen. Danach wird in einem Ausgabeschritt 103 ein Synchronisationssignal S an einen Synchronisationseingang 70 des Funkmoduls 40 ausgegeben, wobei das Synchronisationssignal S anhand des vom Uhrenmaster 3 ausgegebenen Signals ausgegeben wird. Anhand des Synchronisationssignals S wird dann in einem Wechselschritt 104 eine Frequenz eines Frequenzbereichs eines Funkkanals K gewechselt, wobei das Wechseln der Frequenz anhand einer Hopping-Tabelle H erfolgt.

Der Funkteilnehmer 50 kann dem ersten Funkteilnehmer 51 und/oder dem zweiten Funkteilnehmer 52 der Fig. 1 entsprechen. Die Funkverbindung 60 kann der ersten Funkverbindung 61 und/oder der zweiten Funkverbindung 62 der Fig. 1 entsprechen. Das Funkmodul 40 kann dem ersten Funkmodul 41 und/oder dem zweiten Funkmodul 42 der Fig. 1 entsprechen. Das Bussystem 4 kann dem Bussystem 4 der Fig. 1 entsprechen. Das Synchronisationssignal S kann dem ersten Synchronisationssignal S1 und/oder dem zweiten Synchronisationssignal S2 der Fig. 1 entsprechen. Der Synchronisationseingang 70 kann dem ersten Synchronisationseingang 71 und/oder dem zweiten Synchronisationseingang 72 der Fig. 1 entsprechen. Der Funkkanal K kann dem ersten Funkkanal K1 und/oder dem zweiten Funkkanal K2 der Fig. 1 entsprechen. Die Hopping-Tabelle H kann der ersten Hopping-Tabelle H1 und/oder der zweiten Hopping-Tabelle H2 der Fig. 1 entsprechen.

Es kann vorgesehen sein, dass der Funkteilnehmer 50 vor der Durchführung des Verfahrens in einer Initialisierungsphase die Hopping-Tabelle H übermittelt bekommt und anschließend auf einem Funkkanal K eine erste Übertragung von der Funkvorrichtung 10 erwartet. Anschließend kann der Funkteilnehmer 50 anhand der Hopping-Tabelle H die Frequenz des Funkkanals K ebenfalls wechseln.

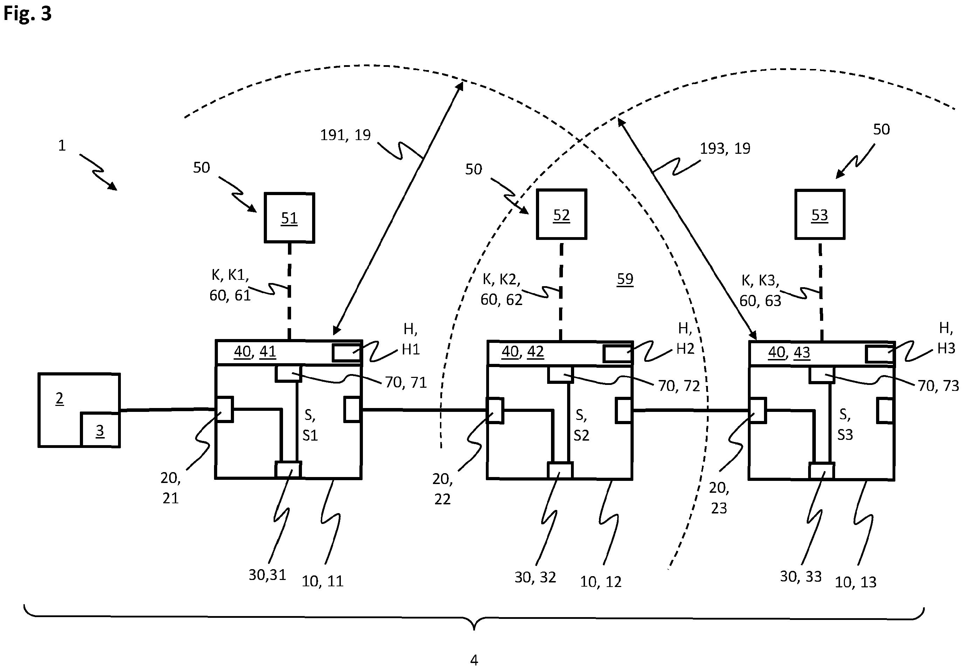

**Fig. 3** zeigt ein Automatisierungssystem 1, das dem Automatisierungssystem 1 der Fig. 1 entspricht, sofern im Folgenden keine Unterschiede beschrieben sind. Der weitere Busteilnehmer 18 der Fig. 1 ist im Automatisierungssystem 1 der Fig. 3 nicht enthalten. Der Uhrenmaster 3 ist in die Master-Steuereinheit 2 integriert. Dies kann analog auch für Fig. 1 der Fall sein, alternativ können die Master-Steuereinheit 2 und der Uhrenmaster 3 im Automatisierungssystem 1 der Fig. 3 auch getrennt voneinander analog zu Fig. 1 ausgeführt sein. Es ist jeweils nur ein erster Funkteilnehmer 51 und ein zweiter Funkteilnehmer 52 vorhanden.

Zusätzlich umfasst das Automatisierungssystem 1 eine dritte Funkvorrichtung 13 und einen dritten Funkteilnehmer 53. Die dritte Funkvorrichtung 13 ist im Wesentlichen analog zu der im Zusammenhang mit der Fig. 1 beschriebenen ersten Funkvorrichtung 11 bzw. zweiten Funkvorrichtung 12 ausgebildet. Der dritte Funkteilnehmer 53 ist im Wesentlichen analog zu dem im Zusammenhang mit der Fig. 1 beschriebenen ersten Funkteilnehmer 51 bzw. zweiten Funkteilnehmer 52 ausgebildet. Die dritte Funkvorrichtung 13 dient zum Einbinden des dritten Funkteilnehmers 53 in das Automatisierungssystem 1. Es kann beispielsweise vorgesehen sein, dass der dritte Funkteilnehmer 53 Sensoren und/oder Aktoren umfasst, wobei Sensordaten der Sensoren in das Bussystem 4 eingelesen oder Befehle vom Bussystem 4 an die Aktoren übertragen werden sollen und dies mittels der dritten Funkvorrichtung 13 erfolgen kann. Die dritte Funkvorrichtung 13 weist ein drittes Synchronisationselement 33, ein drittes Funkmodul 43 und einen dritten Anschluss 23 für das Bussystem 4 auf. Das dritte Funkmodul 43 kann dritte Funkverbindungen 63 zum dritten Funkteilnehmer 53 aufbauen, wobei die dritte Funkverbindung 63 in der Darstellung der Fig. 3 als gestrichelte Linie angedeutet ist. Über die dritte Funkverbindungen 63 können Daten zwischen dem dritten Funkteilnehmer 53 und dem Bussystem 4 ausgetauscht werden, wobei dieser Datenaustausch mittels der dritten Funkvorrichtung 13 ermöglicht wird. Die dritte Funkverbindung 63 weist den dritten Funkkanal K3 auf. Der dritte Funkkanal K3 umfasst dabei einen Frequenzbereich, in dem eine Frequenz ausgewählt werden kann. Das dritte Funkmodul 43 weist einen dritten Synchronisationseingang 73 auf. Das dritte Synchronisationselement 33 ist eingerichtet, anhand eines über den dritten Anschluss 23 für das Bussystem 4 vom Uhrenmaster 3 empfangenen Signals ein drittes Synchronisationssignal S3 an den dritten Synchronisationseingang 73 des dritten Funkmoduls 43 auszugeben. Das dritte Funkmodul 43 ist eingerichtet, anhand des dritten Synchronisationssignals S3 eine Frequenz innerhalb des Frequenzbereichs des dritten Funkkanals K3 zu wechseln, wobei das Wechseln der Frequenz anhand einer dritten Hopping-Tabelle H3 erfolgt.

Es können auch mehr als ein dritter Funkteilnehmer 53 vorgesehen sein, beispielsweise bis zu acht dritte Funkteilnehmer 53. Entspricht die dritte Funkverbindung 63 dem IO-Link-Wireless-Standard, sind bis zu acht parallele dritte Funkverbindungen 63 möglich.

In dem in Fig. 3 dargestellten Ausführungsbeispiel ist die zweite Funkvorrichtung 12 innerhalb einer Funkreichweite 19 der ersten Funkvorrichtung 11, also einer ersten Funkreichweite 191 und einer Funkreichweite 19 der dritten Funkvorrichtung 13, also einer dritten Funkreichweite 193 angeordnet. Die erste Funkvorrichtung 11 ist außerhalb der dritten Funkreichweite 193 der dritten Funkvorrichtung 13 angeordnet. Dann kann der dritte Funkkanal K3 mit der dritten Hopping-Tabelle H3 identisch zum ersten Funkkanal K1 mit der ersten Hopping-Tabelle H1 sein. Dadurch wird es möglich, für die erste Funkvorrichtung 11 und die dritte Funkvorrichtung 13 denselben ersten Funkkanal K1 und dieselbe erste Hopping-Tabelle H1 zu verwenden, da durch die Anordnung der ersten Funkvorrichtung 11 außerhalb der dritten Funkreichweite 193 der dritten Funkvorrichtung 13 sich die erste Funkvorrichtung 11 und die dritte Funkvorrichtung 13 nicht gegenseitig stören. Es kann vorgesehen sein, dass in einem Bereich 59 weder erste Funkteilnehmer 51 noch dritte Funkteilnehmer 53 angeordnet sind, wobei der Bereich 59 innerhalb der ersten Funkreichweite 191 der ersten Funkvorrichtung 11 und der dritten Funkreichweite 193 der dritten Funkvorrichtung 13 angeordnet ist. Somit kann die zweite Funkvorrichtung 12 im Bereich 59 angeordnet sein und kann zum Einbinden von zweiten Funkteilnehmern 52 im Bereich 59 genutzt werden. Dies ist insbesondere dann sinnvoll, wenn der dritte Funkkanal K3 mit der dritten Hopping-Tabelle H3 identisch zum ersten Funkkanal K1 mit der ersten Hopping-Tabelle H1 ist.

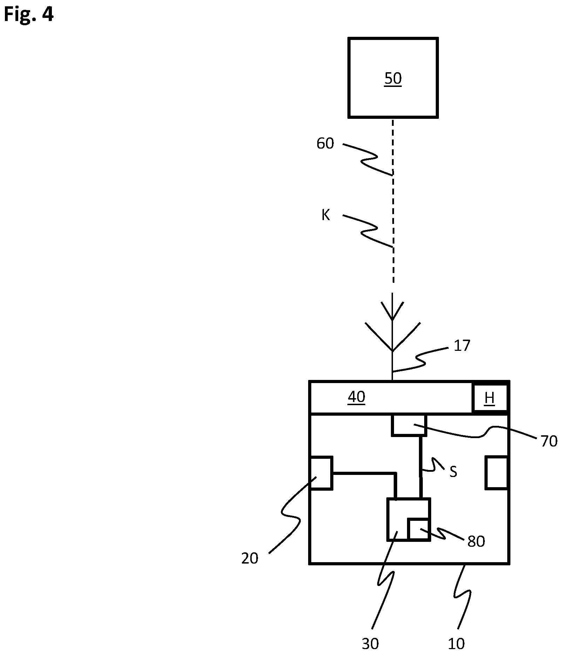

**Fig. 4** zeigt eine Funkvorrichtung 10 zum drahtlosen Einbinden eines Funkteilnehmers 50 in ein Automatisierungssystem 1, wobei die Funkvorrichtung 10 einen Anschluss 20 für ein Bussystem 4, ein Synchronisationselement 30 und ein Funkmodul 40 aufweist, wobei das Funkmodul 40 eingerichtet ist, eine drahtlose Verbindung 60 zum Funkteilnehmer 50 aufzubauen, wobei das Funkmodul 40 einen Synchronisationseingang 70 aufweist, wobei das Synchronisationselement 30 eingerichtet ist, anhand eines über den Anschluss 20 für das Bussystem 4 vom Uhrenmaster 3 empfangenen Signals ein Synchronisationssignal S an den Synchronisationseingang 70 des Funkmoduls 40 auszugeben, wobei das Funkmodul 40 eingerichtet ist, anhand des Synchronisationssignals S die Frequenz eines Funkkanals K zu wechseln, wobei das Wechseln der Frequenz des Funkkanals K anhand einer Hopping-Tabelle H erfolgt. Die Funkvorrichtung 10 weist eine Antenne 17 auf. Die Funkvorrichtung 10 kann dabei den bereits gezeigten ersten Funkvorrichtungen 11, zweiten Funkvorrichtungen 12 oder dritten Funkvorrichtungen 13 entsprechen, wobei diese ebenfalls mit der Antenne 17 ausgestattet sein können.

In einem Ausführungsbeispiel umfasst das Synchronisationselement 30 eine synchronisierte Uhr 80. Das Synchronisationssignal S wird anhand einer Uhrzeit der synchronisierten Uhr 80 ausgegeben, wobei die Uhrzeit der synchronisierten Uhr 80 anhand des vom Uhrenmaster 3 ausgegebenen Signals eingestellt wird. Dies kann zu vorgegebenen Zeiten geschehen, wobei die vorgegebenen Zeiten Teil des vom Uhrenmaster 3 ausgegebenen Signals sein können. Alternativ können die vorgegebenen Zeiten in einem Steuerungsprogramm der Funkvorrichtung 10 hinterlegt sein. Analog können auch die in den Fig. 1 bis 3 gezeigten ersten Funkvorrichtungen 11, zweiten Funkvorrichtungen 12 und/oder dritten Funkvorrichtungen 13 eine entsprechende synchronisierte Uhr 80 beinhalten.

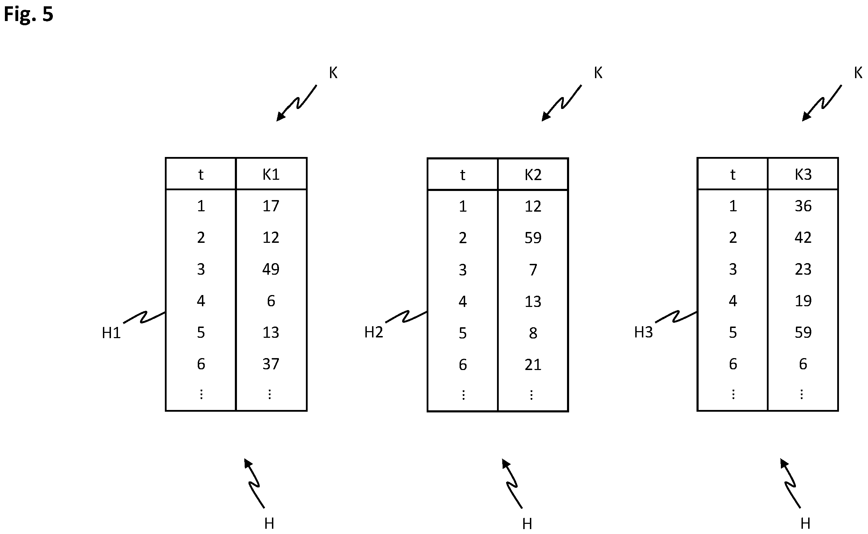

**Fig. 5** zeigt Hopping-Tabellen H, die zum Wechseln einer Frequenz eines Funkkanals K verwendet werden können. Die Hopping-Tabellen umfassen eine erste Hopping-Tabelle H1 für den ersten Funkkanal K1, eine zweite Hopping-Tabelle H2 für den zweiten Funkkanal K2 sowie eine dritte Hopping-Tabelle H3 für einen dritten Funkkanal K3. Die erste Hopping-Tabelle H1, die zweite Hopping-Tabelle H2 und die dritte Hopping-Tabelle H3 können wie für die Fig. 1 bis 3 bereits beschrieben zum Einsatz kommen. Sind die erste Funkvorrichtung 11 und die dritte Funkvorrichtung 13 wie in Fig. 3 gezeigt so angeordnet, dass beide denselben Funkkanal K nutzen können, kann der dritte Funckanal K3 mit der dritten Hopping-Tabelle H3 mit dem ersten Funkkanal K1 mit der ersten Hopping-Tabelle H1 übereinstimmen. Im IO-Link-Wireless-Verfahren können bis zu fünf verschiedene Hopping-Tabellen H für fünf Funkkanäle K verwendet werden.

In einem Ausführungsbeispiel erfolgt ein Wechsel der Frequenz eines der Funkkanäle K nach einem vorgegebenen Zeitintervall t, insbesondere in einem Zeitintervall t zwischen einhundert Mikrosekunden und zehn Millisekunden. Insbesondere kann der Wechsel alle 1,664 Millisekunden erfolgen. Das Wechseln der Frequenz der Funkkanäle K kann eine Auswahl einer Sende- und Empfangsfrequenz beinhalten. Dabei kann es einerseits vorgesehen sein, dass der Zeitpunkt des Wechsels der Frequenz durch das vom Uhrenmaster 3 ausgegebene Signal bestimmt wird, entweder über einen Befehl, ein Synchronisationssignal S auszugeben oder indem das vom Uhrenmaster 3 ausgegebene Signal die vorgegebenen Zeitintervalle t beinhaltet und zusätzlich die synchronisierten Uhren 80 der Funkteilnehmer 10 anhand des Signals synchronisiert werden. Ferner können fest vorgegebene Zeitintervalle t oder Zeitpunkte im Steuerungsprogramm der Funkvorrichtung 10 hinterlegt sein.

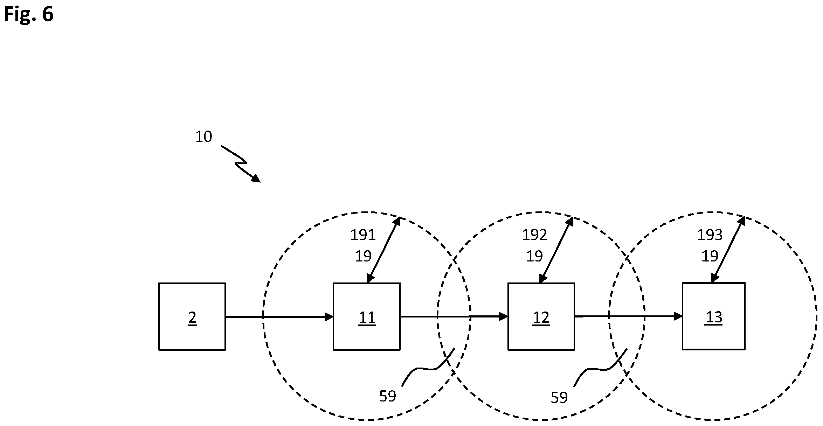

**Fig. 6** zeigt ein Automatisierungssystem 1, das dem Automatisierungssystem 1 der Fig. 3 entspricht, sofern im Folgenden keine Unterschiede beschrieben sind. Aus Gründen der Übersichtlichkeit wurde auf die Darstellung von Anschlüssen 20, Synchronisationselementen 30, Funkmodulen 40 und Synchronisationseingängen 70 der ersten Funkvorrichtung 11, zweiten Funkvorrichtung 12 und dritten Funkvorrichtung 13 verzichtet, diese können wie in Fig. 3 gezeigt ausgestaltet sein.

Die erste Funkvorrichtung 11 ist außerhalb der zweiten Funkreichweite 192 der zweiten Funkvorrichtung 12 beziehungsweis der dritten Funkreichweite 193 der dritten Funkvorrichtung 13 angeordnet. Die zweite Funkvorrichtung 12 ist außerhalb der ersten Funkreichweite 191 der ersten Funkvorrichtung 11 beziehungsweis der dritten Funkreichweite 193 der dritten Funkvorrichtung 13 angeordnet. Die dritte Funkvorrichtung 13 ist außerhalb der ersten Funkreichweite 191 der ersten Funkvorrichtung 11 beziehungsweis der zweiten Funkreichweite 192 der zweiten Funkvorrichtung 12 angeordnet. Bereiche 59 liegen jedoch innerhalb der Funkreichweite 19 zweier benachbarter Funkvorrichtungen 10, einer der Bereiche 59 innerhalb der ersten Funkreichweite 191 der ersten Funkvorrichtung 11 und der zweiten Funkreichweite 192 der zweiten Funkvorrichtung 12 sowie ein Bereich 59 innerhalb der zweiten Funkreichweite 192 der zweiten Funkvorrichtung 12 und der dritten Funkreichweite 193 der dritten Funkvorrichtung 13. Die zweite Hopping-Tabelle H2 der zweiten Funkvorrichtung 12 muss sich deshalb auf jeden Fall von den Hopping-Tabellen H der ersten Funkvorrichtung 11 und der dritten Funkvorrichtung 13 unterscheiden, wobei die erste Funkvorrichtung 11 und die dritte Funkvorrichtung 13 eine identische Hopping-Tabelle H (beispielsweise die erste Hopping-Tabelle H1) oder ebenfalls unterschiedliche Hopping-Tabellen H verwenden können.

### Bezugszeichenliste

- 1: Automatisierungssystem
- 2: Master-Steuereinheit
- 3: Uhrenmaster
- 4: Bussystem
- 10: Funkvorrichtung
- 11: erste Funkvorrichtung
- 12: zweite Funkvorrichtung
- 13: dritte Funkvorrichtung
- 17: Antenne
- 18: weiterer Busteilnehmer
- 19: Funkreichweite
- 20: Anschluss
- 21: erster Anschluss
- 22: zweiter Anschluss
- 23: dritter Anschluss
- 30: Synchronisationselement
- 31: erstes Synchronisationselement
- 32: zweites Synchronisationselement
- 33: drittes Synchronisationselement
- 40: Funkmodul
- 41: erstes Funkmodul
- 42: zweites Funkmodul
- 43: drittes Funkmodul
- 50: Funkteilnehmer
- 51: erster Funkteilnehmer
- 52: zweiter Funkteilnehmer
- 53: dritter Funkteilnehmer
- 59: Bereich
- 60: Funkverbindung
- 61: erste Funkverbindung
- 62: zweite Funkverbindung
- 63: dritte Funkverbindung
- 70: Synchronisationseingang
- 71: erster Synchronisationseingang
- 72: zweiter Synchronisationseingang
- 73: dritter Synchronisationseingang
- 80: synchronisierte Uhr
- 100: Verfahrensablauf
- 101: Aufbauschritt
- 102: Empfangsschritt
- 103: Ausgabeschritt
- 104: Wechselschritt

- 191: erste Funkreichweite
- 192: zweite Funkreichweite
- 193: dritte Funkreichweite

- H: Hopping-Tabelle
- H1: erste Hopping-Tabelle
- H2: zweite Hopping-Tabelle
- H3: dritte Hopping-Tabelle
- K: Funkkanal
- K1: erster Funkkanal
- K2: zweiter Funkkanal
- K3: dritter Funkkanal
- t: Zeitintervall
- S: Synchronisationssignal
- S1: erstes Synchronisationssignal
- S2: zweites Synchronisationssignal
- S3: drittes Synchronisationssignal

## Patentansprüche

1. Automatisierungssystem (1) mit mindestens einer Master-Steuereinheit (2), mindestens einem ersten Funkteilnehmer (51), einer ersten Funkvorrichtung (11) und einem Uhrenmaster (3), der Signale ausgeben kann, wobei mittels der Master-Steuereinheit (2) ein Bussystem (4) bereitgestellt wird, wobei eine Kommunikation innerhalb des Automatisierungssystems (1) mittels des Bussystems (4) erfolgt, wobei die erste Funkvorrichtung (11) ein erstes Synchronisationselement (31), ein erstes Funkmodul (41) und einen ersten Anschluss (21) für das Bussystem (4) aufweist, wobei das erste Funkmodul (41) eine erste Funkverbindung (61) zum ersten Funkteilnehmer (51) aufbauen kann und dadurch Daten zwischen dem ersten Funkteilnehmer (51) und dem Bussystem (4) ausgetauscht werden können, wobei die erste Funkverbindung (61) einen ersten Funkkanal (K1) aufweist, wobei der erste Funkkanal (K1) einen ersten Frequenzbereich umfasst, wobei das erste Funkmodul (41) einen ersten Synchronisationseingang (71) aufweist, wobei das erste Synchronisationselement (31) eingerichtet ist, anhand eines über den ersten Anschluss (21) für das Bussystem (4) vom Uhrenmaster (3) empfangenen Signals ein erstes Synchronisationssignal (S1) an den ersten Synchronisationseingang (71) des ersten Funkmoduls (41) auszugeben, wobei das erste Funkmodul (41) eingerichtet ist, anhand des ersten Synchronisationssignals (S1) eine Frequenz innerhalb des ersten Frequenzbereichs des ersten Funkkanals (K1) wechseln zu können, wobei das Wechseln der Frequenz innerhalb des ersten Frequenzbereichs anhand einer ersten Hopping-Tabelle (H1) erfolgt, wobei das Automatisierungssystem (1) ferner eine zweite Funkvorrichtung (12) und einen zweiten Funkteilnehmer (52) aufweist, wobei die zweite Funkvorrichtung (12) ein zweites Synchronisationselement (32), ein zweites Funkmodul (42) und einen zweiten Anschluss (22) für das Bussystem (4) aufweist, wobei das zweite Funkmodul (42) eine zweite Funkverbindung (62) zum zweiten Funkteilnehmer (52) aufbauen kann und dadurch Daten zwischen dem zweiten Funkteilnehmer (52) und dem Bussystem (4) ausgetauscht werden können, wobei die zweite Funkverbindung (62) einen zweiten Funkkanal (K2) aufweist, wobei der zweite Funkkanal (K2) einen zweiten Frequenzbereich umfasst, wobei das zweite Funkmodul (42) einen zweiten Synchronisationseingang (72) aufweist, wobei das zweite Synchronisationselement (32) eingerichtet ist, anhand eines über den zweiten Anschluss (22) für das Bussvstem (4) vom Uhrenmaster (3) empfangenen Signals ein zweites Synchronisationssignal (S2) an den zweiten Synchronisationseingang (72) des zweiten Funkmoduls (42) auszugeben, wobei das zweite Funkmodul (42) eingerichtet ist, anhand des zweiten Synchronisationssignals (S2) eine Frequenz innerhalb des zweiten Frequenzbereichs des zweiten Funkkanals (K2) wechseln zu können, wobei das Wechseln der Frequenz innerhalb des zweiten Frequenzbereichs anhand einer zweiten Hopping-Tabelle (H2) erfolgt, wobei das Automatisierungssystem (1) ferner eine dritte Funkvorrichtung (13) und einen dritten Funkteilnehmer (53) aufweist, wobei die dritte Funkvorrichtung (13) ein drittes Synchronisationselement (33), ein drittes Funkmodul (43) und einen dritten Anschluss (23) für das Bussystem (4) aufweist, wobei das dritte Funkmodul (43) eine dritte Funkverbindung (63) zum dritten Funkteilnehmer (53) aufbauen kann und dadurch Daten zwischen dem dritten Funkteilnehmer (53) und dem Bussystem (4) ausgetauscht werden können, wobei die dritte Funkverbindung (63) einen dritten Funkkanal (K3) aufweist, wobei der dritte Funkkanal (K3) einen dritten Frequenzbereich umfasst, wobei das dritte Funkmodul (43) einen dritten Synchronisationseingang (73) aufweist, wobei das dritte Synchronisationselement (33) eingerichtet ist, anhand eines über den dritten Anschluss (23) für das Bussystem (4) vom Uhrenmaster (3) empfangenen Signals ein drittes Synchronisationssignal (S3) an den dritten Synchronisationseingang (73) des dritten Funkmoduls (43) auszugeben, wobei das dritte Funkmodul (43) eingerichtet ist, anhand des dritten Synchronisationssignals (S3) eine Frequenz innerhalb des dritten Frequenzbereichs des dritten Funkkanals (K3) wechseln zu können, wobei das Wechseln der Frequenz innerhalb des dritten Frequenzbereichs anhand einer dritten Hopping-Tabelle (H3) erfolgt, **dadurch gekennzeichnet, dass** die zweite Funkvorrichtung (12) innerhalb einer ersten Funkreichweite (191) der ersten Funkvorrichtung (11) und einer dritten Funkreichweite (193) der dritten Funkvorrichtung (13) angeordnet ist, dass die erste Funkvorrichtung (11) außerhalb der dritten Funkreichweite (193) der dritten Funkvorrichtung (13) angeordnet ist, und dass der dritte Funkkanal (K3) mit der dritten Hopping-Tabelle (H3) identisch zum ersten Funkkanal (K1) mit der ersten Hopping-Tabelle (H1) ist.

2. Automatisierungssystem (1) nach Anspruch 1, wobei das erste Funkmodul (41) eingerichtet ist, bis zu acht erste Funkteilnehmer (51) einzubinden.

3. Automatisierungssystem (1) nach Anspruch 1 oder 2, wobei das Wechseln der Frequenz des ersten Funkkanals (K1) und der Frequenz des zweiten Funkkanals (K2) gleichzeitig erfolgt.

4. Automatisierungssystem (1) nach einem der Ansprüche 1 bis 3, wobei ein Wechsel der Frequenz der Funkkanäle (K) nach einem vorgegebenen Zeitintervall (t) erfolgen kann, insbesondere in einem Zeitintervall (t) zwischen einhundert Mikrosekunden und zehn Millisekunden.

5. Automatisierungssystem (1) nach einem der Ansprüche 1 bis 4, wobei eines der Synchronisationselemente (30) eine synchronisierte Uhr (80) beinhaltet und wobei das zugehörige Synchronisationssignal (S) anhand einer Uhrzeit der synchronisierten Uhr (80) ausgegeben wird, wobei eine Uhrzeit der synchronisierten Uhr (80) anhand des vom Uhrenmaster (3) ausgegebenen Signals eingestellt werden kann.

6. Automatisierungssystem (1) nach Anspruch 5, wobei das vom Uhrenmaster (3) ausgegebene Signal eine Uhrzeit umfasst.

7. Verfahren zum drahtlosen Einbinden eines ersten Funkteilnehmers (51), eines zweiten Funkteilnehmers (52) und eines dritten Funkteilnehmers (53) in ein Automatisierungssystem (1) mit den folgenden Schritten:
- Aufbauen einer ersten Funkverbindung (61) zum ersten Funkteilnehmer (51) mittels eines ersten Funkmoduls (41) einer ersten Funkvorrichtung (11), einer zweiten Funkverbindung (62) zum zweiten Funkteilnehmer (52) mittels eines zweiten Funkmoduls (42) einer zweiten Funkvorrichtung (12) und einer dritten Funkverbindung (63) zum dritten Funkteilnehmer (53) mittels eines dritten Funkmoduls (42) einer dritten Funkvorrichtung (13) in einem Aufbauschritt (101);
- Empfangen eines Signals von einem Uhrenmaster (3) eines Bussystems (4) in einem Empfangsschritt (102);
- Ausgeben eines ersten Synchronisationssignals (S1) an einen ersten Synchronisationseingang (71) des ersten Funkmoduls (41), eines zweiten Synchronisationssignals (S2) an einen zweiten Synchronisationseingang (72) des zweiten Funkmoduls (42) und eines dritten Synchronisationssignals (S3) an einen dritten Synchronisationseingang (73) des dritten Funkmoduls (43) in einem Ausgabeschritt (103), wobei die Synchronisationssignale (S1, S2, S3) anhand des vom Uhrenmaster (3) ausgegebenen Signals ausgegeben werden;
- Wechseln einer Frequenz innerhalb eines Frequenzbereichs eines ersten Funkkanals (K1) der ersten Funkverbindung (61) anhand einer ersten Hopping-Tabelle (H1), eines zweiten Funkkanals (K2) der zweiten Funkverbindung (62) anhand einer zweiten Hopping-Tabelle (H2) und eines dritten Funkkanals (K3) der dritten Funkverbindung (63) anhand einer dritten Hopping-Tabelle (H3) anhand der Synchronisationssignale (S1, S2, S3) in einem Wechselschritt (104);
**dadurch gekennzeichnet, dass** die zweite Funkvorrichtung (12) innerhalb einer ersten Funkreichweite (191) der ersten Funkvorrichtung (11) und einer dritten Funkreichweite (193) der dritten Funkvorrichtung (13) angeordnet ist, dass die erste Funkvorrichtung (11) außerhalb der dritten Funkreichweite (193) der dritten Funkvorrichtung (13) angeordnet ist, und dass der dritte Funkkanal (K3) mit der dritten Hopping-Tabelle (H3) identisch zum ersten Funkkanal (K1) mit der ersten Hopping-Tabelle (H1) ist.

## Claims

1. Automation system (1) having at least one master control unit (2), at least one first radio subscriber (51), a first radio apparatus (11) and a clock master (3), which can output signals, wherein a bus system (4) is provided by means of the master control unit (2), wherein communication occurs within the automation system (1) by means of the bus system (4), wherein the first radio apparatus (11) has a first synchronization element (31), a first radio module (41) and a first connection (21) for the bus system (4), wherein the first radio module (41) can establish a first radio connection (61) to the first radio subscriber (51) and, as a result, data can be exchanged between the first radio subscriber (51) and the bus system (4), wherein the first radio connection (61) has a first radio channel (K1), wherein the first radio channel (K1) comprises a first frequency range, wherein the first radio module (41) has a first synchronization input (71), wherein the first synchronization element (31) is designed to output a first synchronization signal (S1) to the first synchronization input (71) of the first radio module (41) on the basis of a signal received from the clock master (3) via the first connection (21) for the bus system (4), wherein the first radio module (41) is designed, on the basis of the first synchronization signal (S1), to be able to change a frequency within the first frequency range of the first radio channel (K1), wherein the changing of the frequency within the first frequency range occurs on the basis of a first hopping table (H1), wherein the automation system (1) also has a second radio apparatus (12) and a second radio subscriber (52), wherein the second radio apparatus (12) has a second synchronization element (32), a second radio module (42) and a second connection (22) for the bus system (4), wherein the second radio module (42) can establish a second radio connection (62) to the second radio subscriber (52) and, as a result, data can be exchanged between the second radio subscriber (52) and the bus system (4), wherein the second radio connection (62) has a second radio channel (K2), wherein the second radio channel (K2) comprises a second frequency range, wherein the second radio module (42) has a second synchronization input (72), wherein the second synchronization element (32) is designed to output a second synchronization signal (S2) to the second synchronization input (72) of the second radio module (42) on the basis of a signal received from the clock master (3) via the second connection (22) for the bus system (4), wherein the second radio module (42) is designed, on the basis of the second synchronization signal (S2), to be able to change a frequency within the second frequency range of the second radio channel (K2), wherein the changing of the frequency within the second frequency range occurs on the basis of a second hopping table (H2), wherein the automation system (1) also has a third radio apparatus (13) and a third radio subscriber (53), wherein the third radio apparatus (13) has a third synchronization element (33), a third radio module (43) and a third connection (23) for the bus system (4), wherein the third radio module (43) can establish a third radio connection (63) to the third radio subscriber (53) and, as a result, data can be exchanged between the third radio subscriber (53) and the bus system (4), wherein the third radio connection (63) has a third radio channel (K3), wherein the third radio channel (K3) comprises a third frequency range, wherein the third radio module (43) has a third synchronization input (73), wherein the third synchronization element (33) is designed to output a third synchronization signal (S3) to the third synchronization input (73) of the third radio module (43) on the basis of a signal received from the clock master (3) via the third connection (23) for the bus system (4), wherein the third radio module (43) is designed, on the basis of the third synchronization signal (S3), to be able to change a frequency within the third frequency range of the third radio channel (K3), wherein the changing of the frequency within the third frequency range occurs on the basis of a third hopping table (H3), **characterized in that** the second radio apparatus (12) is arranged within a first radio range (191) of the first radio apparatus (11) and a third radio range (193) of the third radio apparatus (13), **in that** the first radio apparatus (11) is arranged outside of the third radio range (193) of the third radio apparatus (13), and **in that** the third radio channel (K3) with the third hopping table (H3) is identical to the first radio channel (K1) with the first hopping table (H1).

2. Automation system (1) according to Claim 1, wherein the first radio module (41) is designed to integrate up to eight first radio subscribers (51).

3. Automation system (1) according to Claim 1 or 2, wherein the frequency of the first radio channel (K1) and the frequency of the second radio channel (K2) are changed at the same time.

4. Automation system (1) according to one of Claims 1 to 3, wherein the frequency of the radio channels (K) can be changed after a predetermined time interval (t), in particular in a time interval (t) between one hundred microseconds and ten milliseconds.

5. Automation system (1) according to one of Claims 1 to 4, wherein one of the synchronization elements (30) contains a synchronized clock (80) and wherein the associated synchronization signal (S) is output based on a time of the synchronized clock (80), wherein a time of the synchronized clock (80) can be set based on the signal that is output by the clock master (3).

6. Automation system (1) according to Claim 5, wherein the signal that is output by the clock master (3) includes a time.

7. Method for wirelessly integrating a first radio subscriber (51), a second radio subscriber (52) and a third radio subscriber (53) into an automation system (1), the method comprising the following steps:
- establishing a first radio connection (61) to the first radio subscriber (51) by means of a first radio module (41) of a first radio apparatus (11), a second radio connection (62) to the second radio subscriber (52) by means of a second radio module (42) of a second radio apparatus (12) and a third radio connection (63) to the third radio subscriber (53) by means of a third radio module (42) of a third radio apparatus (13) in an establishing step (101);
- receiving a signal from a clock master (3) of a bus system (4) in a receiving step (102);
- outputting a first synchronization signal (S1) to a first synchronization input (71) of the first radio module (41), a second synchronization signal (S2) to a second synchronization input (72) of the second radio module (42) and a third synchronization signal (S3) to a third synchronization input (73) of the third radio module (43) in an output step (103), wherein the synchronization signals (S1, S2, S3) are output based on the signal that is output by the clock master (3);
- changing a frequency within a frequency range of a first radio channel (K1) of the first radio connection (61) based on a first hopping table (H1), a second radio channel (K2) of the second radio connection (62) based on a second hopping table (H2) and a third radio channel (K3) of the third radio connection (63) based on a third hopping table (H3) based on the synchronization signals (S1, S2, S3) in a changing step (104);
**characterized in that** the second radio apparatus (12) is arranged within a first radio range (191) of the first radio apparatus (11) and a third radio range (193) of the third radio apparatus (13), **in that** the first radio apparatus (11) is arranged outside of the third radio range (193) of the third radio apparatus (13), and **in that** the third radio channel (K3) with the third hopping table (H3) is identical to the first radio channel (K1) with the first hopping table (H1).

## Revendications

1. Système d'automatisation (1), comprenant au moins une unité de commande maître (2), au moins un premier abonné radio (51), un premier dispositif radio (11) et un maître d'horloge (3) qui peut émettre des signaux, un système de bus (4) étant fourni au moyen de l'unité de commande maître (2), une communication à l'intérieur du système d'automatisation (1) ayant lieu au moyen du système de bus (4), le premier dispositif radio (11) présentant un premier élément de synchronisation (31), un premier module radio (41) et une première connexion (21) pour le système de bus (4), dans lequel le premier module radio (41) peut établir une première liaison radio (61) avec le premier abonné radio (51) et de ce fait des données peuvent être échangées entre le premier abonné radio (51) et le système de bus (4), la première liaison radio (61) présentant un premier canal radio (K1), le premier canal radio (K1) comprenant une première plage de fréquences, le premier module radio (41) présentant une première entrée de synchronisation (71), le premier élément de synchronisation (31) étant conçu pour émettre à l'aide d'un signal pour le système de bus (4), reçu du maître d'horloge (3) par l'intermédiaire de la première connexion (21), un premier signal de synchronisation (S1) à la première entrée de synchronisation (71) du premier module radio (41), le premier module radio (41) étant conçu pour pouvoir changer de fréquence à l'intérieur de la première plage de fréquences du premier canal radio (K1) à l'aide du premier signal de synchronisation (S1), le changement de la fréquence à l'intérieur de la première plage de fréquences étant effectué à l'aide d'une première table de saut (H1), le système d'automatisation (1) présentant en outre un deuxième dispositif radio (12) et un deuxième abonné radio (52), le deuxième dispositif radio (12) présentant un deuxième élément de synchronisation (32), un deuxième module radio (42) et une deuxième connexion (22) pour le système de bus (4), dans lequel le deuxième module radio (42) peut établir une deuxième liaison radio (62) avec le deuxième abonné radio (52) et de ce fait des données peuvent être échangées entre le deuxième abonné radio (52) et le système de bus (4), la deuxième liaison radio (62) présentant un deuxième canal radio (K2), le deuxième canal radio (K2) comprenant une deuxième plage de fréquences, le deuxième module radio (42) présentant une deuxième entrée de synchronisation (72), le deuxième élément de synchronisation (32) étant conçu pour émettre à l'aide d'un signal pour le système de bus (4), reçu du maître d'horloge (3) par l'intermédiaire de la deuxième connexion (22), un deuxième signal de synchronisation (S2) à la deuxième entrée de synchronisation (72) du deuxième module radio (42), le deuxième module radio (42) étant conçu pour pouvoir changer de fréquence à l'intérieur de la deuxième plage de fréquences du deuxième canal radio (K2) à l'aide du deuxième signal de synchronisation (S2), le changement de la fréquence à l'intérieur de la deuxième plage de fréquences étant effectué à l'aide d'une deuxième table de saut (H2), le système d'automatisation (1) présentant en outre un troisième dispositif radio (13) et un troisième abonné radio (53), le troisième dispositif radio (13) présentant un troisième élément de synchronisation (33), un troisième module radio (43) et une troisième connexion (23) pour le système de bus (4), dans lequel le troisième module radio (43) peut établir une troisième liaison radio (63) avec le troisième abonné radio (53) et de ce fait des données peuvent être échangées entre le troisième abonné radio (53) et le système de bus (4), la troisième liaison radio (63) présentant un troisième canal radio (K3), le troisième canal radio (K3) comprenant une troisième plage de fréquences, le troisième module radio (43) présentant une troisième entrée de synchronisation (73), le troisième élément de synchronisation (33) étant conçu pour émettre à l'aide d'un signal pour le système de bus (4), reçu du maître d'horloge (3) par l'intermédiaire de la troisième connexion (23), un troisième signal de synchronisation (S3) à la troisième entrée de synchronisation (73) du troisième module radio (43), le troisième module radio (43) étant conçu pour pouvoir changer de fréquence à l'intérieur de la troisième plage de fréquences du troisième canal radio (K3) à l'aide du troisième signal de synchronisation (S3), le changement de la fréquence à l'intérieur de la troisième plage de fréquences étant effectué à l'aide d'une troisième table de saut (H3),
**caractérisé en ce que** le deuxième dispositif radio (12) est disposé à l'intérieur d'une première portée radio (191) du premier dispositif radio (11) et d'une troisième portée radio (193) du troisième dispositif radio (13), **en ce que** le premier dispositif radio (11) est disposé en dehors de la troisième portée radio (193) du troisième dispositif radio (13), et **en ce que** le troisième canal radio (K3) avec la troisième table de saut (H3) est identique au premier canal radio (K1) avec la première table de saut (H1).

2. Système d'automatisation (1) selon la revendication 1, dans lequel le premier module radio (41) est conçu pour intégrer jusqu'à huit premiers abonnés radio (51).

3. Système d'automatisation (1) selon la revendication 1 ou 2, dans lequel le changement de la fréquence du premier canal radio (K1) et de la fréquence du deuxième canal radio (K2) est effectué simultanément.

4. Système d'automatisation (1) selon l'une quelconque des revendications 1 à 3, dans lequel un changement de la fréquence des canaux radio (K) peut être effectué après un intervalle de temps prédéfini (t), en particulier dans un intervalle de temps (t) entre cent microsecondes et dix millisecondes.

5. Système d'automatisation (1) selon l'une quelconque des revendications 1 à 4, dans lequel l'un des éléments de synchronisation (30) comporte une horloge synchronisée (80), et dans lequel le signal de synchronisation (S) associé est émis à l'aide de l'heure de l'horloge synchronisée (80), l'heure de l'horloge synchronisée (80) pouvant être réglée à l'aide d'un signal émis par le maître d'horloge (3).

6. Système d'automatisation (1) selon la revendication 5, dans lequel le signal émis par le maître d'horloge (3) comprend l'heure.

7. Procédé d'intégration sans fil d'un premier abonné radio (51), d'un deuxième abonné radio (52) et d'un troisième abonné radio (53) dans un système d'automatisation (1), comprenant les étapes suivantes consistant à :
- établir une première liaison radio (61) avec le premier abonné radio (51) au moyen d'un premier module radio (41) d'un premier dispositif radio (11), une deuxième liaison radio (62) avec le deuxième abonné radio (52) au moyen d'un deuxième module radio (42) d'un deuxième dispositif radio (12), et une troisième liaison radio (63) avec le troisième abonné radio (53) au moyen d'un troisième module radio (42) d'un troisième dispositif radio (13) dans une étape d'établissement (101) ;
- recevoir un signal d'un maître d'horloge (3) d'un système de bus (4) dans une étape de réception (102) ;
- émettre un premier signal de synchronisation (S1) à destination d'une première entrée de synchronisation (71) du premier module radio (41), un deuxième signal de synchronisation (S2) à destination d'une deuxième entrée de synchronisation (72) du deuxième module radio (42) et un troisième signal de synchronisation (S3) à destination d'une troisième entrée de synchronisation (73) du troisième module radio (43) dans une étape d'émission (103), les signaux de synchronisation (S1, S2, S3) étant émis à l'aide du signal émis par le maître d'horloge (3) ;
- changer une fréquence à l'intérieur d'une plage de fréquences d'un premier canal radio (K1) de la première liaison radio (61) à l'aide d'une première table de saut (H1), d'un deuxième canal radio (K2) de la deuxième liaison radio (62) à l'aide d'une deuxième table de saut (H2) et d'un troisième canal radio (K3) de la troisième liaison radio (63) à l'aide d'une troisième table de saut (H3) à l'aide des signaux de synchronisation (S1, S2, S3) dans une étape de changement (104) ;
**caractérisé en ce que** le deuxième dispositif radio (12) est disposé à l'intérieur d'une première portée radio (191) du premier dispositif radio (11) et d'une troisième portée radio (193) du troisième dispositif radio (13), **en ce que** le premier dispositif radio (11) est disposé en dehors de la troisième portée radio (193) du troisième dispositif radio (13), et **en ce que** le troisième canal radio (K3) avec la troisième table de saut (H3) est identique au premier canal radio (K1) avec la première table de saut (H1).
